# EUROPEAN PATENT SPECIFICATION

(11) **EP 4 434 885 B1**
(45) Date of publication and mention of the grant of the patent: **02.12.2026**
(21) Application number: 23163586.3
(22) Date of filing: 22.03.2023
(51) Int. Cl.: B64D 11/06, A47D 9/00

(54) **AN IMPROVED BASSINET**
VERBESSERTE KINDERLIEGE
BERCEAU AMÉLIORÉ

(43) Date of publication of application: 25.09.2024
(73) Proprietor: Safran Seats GB Limited, Cwmbran NP44 3HQ (GB)
(72) Inventor: DOHERTY, Ciaran, Cwmbran, NP44 3HQ (GB); OLIVAS, Laura, Cwmbran, NP44 3HQ (GB)
(74) Representative: Abel & Imray LLP

(56) References cited:
- EP-A1- 3 812 274
- EP-A1- 4 074 599
- CN-U- 217 852 136
- US-A- 5 768 723
- US-A1- 2023 048 280
- MORGAN MITCHELL: "Passive Noise Control in Incubators", THESIS SUBMITTED TO THE FACULTY OF VIRGINIA POLYTECHNIC INSTITUTE AND STATE UNIVERSITY IN PARTIAL FULFILLMENT OF THE REQUIREMENTS FOR THE DEGREE OF MASTER OF SCIENCE IN MECHANICAL ENGINEERING, 13 August 2013 (2013-08-13), pages 1 - 178, XP055177454, Retrieved from the Internet <URL:https://vtechworks.lib.vt.edu/bitstream/handle/10919/51603/Mitchell_MA_T_2013.pdf?sequence=1&isAllowed=y> [retrieved on 20150318]

## Description

### Field of the Invention

The present invention concerns improved bassinets, which are often for babies. More particularly, but not exclusively, this invention concerns improved bassinets for aircraft. The invention also concerns a kit of parts for a bassinet.

### Background of the Invention

Bassinets are commonly used in an aircraft to provide a surface on which a baby can lie. They are particularly useful during long-haul flights. Bassinets are usually configured to be assembled to a frame and, when the bassinet is required, the frame is mounted on an interior wall of the aircraft.

Bassinets for aircraft are usually basic, functional furniture items that are designed to be quick and easy to install as and when they are required. Bassinets are often provided with a removable mattress, so that the surface for the baby to lie on is comfortable.

Aircraft can be a source of a lot of noise including, but not limited to, noises of the engine, which can be very loud. In addition to the noise of the aircraft, the noise is also generated within the aircraft cabin during flight by, for example, passengers talking, in-flight entertainment and/or preparation of food. The noise generated by the aircraft and its passengers may disturb and/or upset babies on-board the aircraft, in addition to other factors that may disturb and/or upset babies, such as the physical effects of being at high altitude.

As a result, babies often cry on aircraft. A baby being disturbed or upset can be a source of stress for the baby's caregivers. The sound of a baby crying may also disturb other passengers on the aircraft.

It would be desirable to improve the comfort of babies and/or other passengers on aircraft.

The present invention seeks to mitigate the above-mentioned problems. Alternatively or additionally, the present invention seeks to provide an improved bassinet for an aircraft, an improved kit of parts for a bassinet.

CN 217 852 136 U (SLAMBOPAD LLC) discloses an extension for a sleep device fence. The extension includes a body including two pairs of opposing side walls, where each side wall is formed of a fabric, where: a first side wall of a pair of opposing side walls has substantially the same size and shape as a second side wall of the pair of opposing side walls, and a second side wall of the pair of opposing side walls has substantially the same size and shape as the first side wall. Each side wall of one pair of opposite side walls is connected with each side wall of the other pair of opposite side walls at an apex, the connected side walls form a rectangular opening, the rectangular opening comprises an open top, an open base, four top corner parts and four bottom corner parts, a sleeve is attached to at least one part of each apex, and the sleeve is connected with the top corner parts and the bottom corner parts. Wherein the sleeve is configured to receive a rod therein, where each side wall comprises a top portion and a bottom portion, and where the fabric is a light limiting material.

The thesis, "Passive Noise Control in Incubators", submitted by MORGAN MITCHELL to the faculty of Virginia Polytechnic Institute and State University in partial fulfilment of the requirements for the degree of Master of Science in Mechanical Engineering discloses a study on how passive noise control devices can be used to reduce SPL levels in incubator NICU environments. A combination of experimental testing coupled with Finite Element simulations were performed for a modern incubator. In the experimental portion, porous mattresses were analyzed to reduce SPL values. These same test scenarios were modeled using the FE software. Using this model, extensive studies were performed on an arrangement of porous mattress materials with simple foam shapes to determine sound absorbing characteristics of several designs.

EP 4 074 599 A1 (BE AEROSPACE INC [US]) discloses an aircraft interior structure which may include a passenger seating section proximate to a passenger compartment including an aircraft seat. The aircraft interior structure may include a seat extension cavity defined within the passenger seating section. The seat extension cavity may correspond to the aircraft seat. The aircraft interior structure may include a bassinet cavity defined within the passenger seating section proximate to the seat extension cavity. The bassinet cavity may be configured to receive a bassinet via an opening in the surface of the aircraft interior structure within the passenger compartment. The bassinet cavity and the bassinet may be accessible from the passenger compartment via the opening in the surface of the aircraft interior structure. The bassinet may be positioned in the bassinet cavity at a location selected to provide an unobstructed line of sight between the aircraft seat and an interior of the bassinet.

### Summary of the Claimed Invention

A foldable bassinet according to claim 1 is provided. A kit of parts according to claim 8 is provided. Preferred embodiments are defined by the dependent claims.

### Summary of the Invention

The present invention provides, according to a first aspect, a foldable bassinet for an aircraft comprising at least:
a base, providing a flat surface, and
a wall, attached to the base and defining an interior of the bassinet;

wherein the wall comprises at least a noise-reducing layer; and
wherein the noise-reducing layer comprises a perforated layer.

The noise-reducing layer may be on the outside of the bassinet.

The base of the bassinet provides a flat surface for a baby to lie on.

The bassinet may further comprise an inner layer facing the interior of the bassinet. The inner layer of the wall of the bassinet is safe for a baby in such a way that, when it is in use, it does not pose a suffocation risk.

The noise-reducing layer of the wall of the bassinet may reduce the noise that can be heard from the interior of the bassinet, for example by a baby lying in the bassinet.

The volume of sound, for example noise generated by the aircraft and its passengers, measured in dB inside the wall of the bassinet, may for example be between 25% and 50% less than that measured outside the wall of the bassinet.

Additionally or alternatively, the noise-reducing layer may reduce the volume of noise that can be heard outside the bassinet, the noise coming from inside the bassinet. The volume of sound, for example from the cries of a baby, measured in dB outside the wall of the bassinet, may be between 25% and 50% less than that measured inside the wall of the bassinet.

The wall of the bassinet may have a thickness of 6mm or less. The wall may be of a thickness such that the bassinet does not occupy significant additional space in the aircraft cabin, as space in the cabin is limited.

The flat surface of the base may be horizontal when the bassinet is in use. The flat surface of the base may be parallel to a floor of the aircraft when the bassinet is in use.

The inner layer of the wall of the bassinet may be the innermost layer of the wall, forming an inner surface of the wall. The inner layer may face into the interior of bassinet, for example towards a baby when the bassinet is in use. The inner layer of the wall may be made from a fabric that is breathable, preferably a fabric such as Nomex^{™}, Alcantara^{™} or a knitted material.

The noise-reducing layer may be outside the inner layer, such that an inner surface of the noise-reducing layer is against at least part of the outer surface of the inner layer.

Preferably, the inner surface of the noise-reducing layer is against the outer surface of the inner layer along the full length/perimeter of the wall. The noise-reducing layer, or at least part of the noise-reducing layer, may be made from a sound-absorbing material, such as open-cell foam or a felt.

The noise-reducing layer may significantly reduce the volume of a sound.

While the bassinet is suitable for an aircraft, it may be for use in other modes of transport such as trains, boats or road vehicles.

The noise-reducing layer may comprise a sound-absorbing layer.

The sound-absorbing layer may be made from a material, which has significant noise-insulating properties. The sound-absorbing layer may be made from open-cell foam or felt.

The noise-reducing layer comprises a perforated layer. The perforated layer may improve the noise reducing properties of the noise-reducing layer by blocking sound generated within the interior of the bassinet, for example noise from a baby when the bassinet is in use. The perforated layer may act as a sound trap for noise.

The perforated layer may be a thin wall structure that is perforated with holes. Holes may occupy up to 40%, particularly between 10% and 20% of the surface area of the perforated layer, preferably the holes occupying up to 15%, more particularly up to 12% of the surface area of the perforated layer, such perforated holes ratio being chosen dependent on the target frequencies to be reduced.

The perforated layer may be a thin wall structure and may be made from highdensity foam, aluminium, plastic or any other material that is capable of trapping and/or blocking noise when perforated.

The wall of the bassinet may be stiff enough such that it is self-supporting. The wall of the bassinet may therefore not require further structural reinforcement, such as an exterior structural frame. The wall of the bassinet may be self-supporting as a result of the material properties of the perforated layer.

The holes of the perforated layer may be empty cavities.

Alternatively, if the noise-reducing layer comprises both a sound-absorbing layer and a perforated layer, the holes of the perforated layer may be filled with the material of the sound-absorbing layer.

The perforated layer may be arranged in series with the sound-absorbing layer, forming the noise-reducing layer.

The bassinet may further comprise an outer layer, the outer layer forming an exterior cover for the wall.

The outer layer may improve reduction and/or blocking of the noise of the aircraft that would be perceived by a baby in the bassinet when it is in use.

The inner layer facing the interior of the bassinet may have a thickness of 1mm or less.

The noise-reducing layer may have a thickness of 4.5mm or less.

The sound-absorbing layer may have a thickness of between 1mm and 2mm, preferably a thickness of approximately 1.5mm.

The perforated layer may have a thickness of between 2mm and 4mm, preferably a thickness of approximately 3mm.

The noise-reducing layer, when formed of the sound-absorbing layer and the perforated layer, may have a total thickness of between 3mm and 6mm, preferably a thickness of approximately 4.5mm.

The outer layer may have a thickness of between 0.1mm and 1mm, preferably a thickness of approximately 0.5mm.

If the noise-reducing layer comprises a sound-absorbing layer and a perforated layer, the outer layer may be adj acent to the perforated layer of the noise-reducing layer.

Alternatively, the outer layer may be adjacent to the sound-absorbing layer of the noise-reducing layer.

The outer layer may be a noise-reflecting layer.

The outer layer may reduce and/or block the noise of the aircraft that would be perceived by a baby, when the bassinet is in use, as a result of the sound-reflecting properties of the outer layer. In other words, the outer layer may reflect noise of the aircraft.

The noise-reflecting layer may improve the noise-reducing qualities of the wall of the bassinet.

However, the noise-reflecting layer may not be suitable for use as an inner layer of the wall, due to potential safety risks, and so it is provided as an outer layer.

The noise-reflecting layer may be made from an impermeable material. The impermeable material may not allow any air to flow through it. Alternatively, the impermeable material may be a breathable material which allows minimal air to flow through it. The impermeable material may not allow fluid to pass through it. The impermeable material may be resistant to liquids and/or gases. Preferably, the impermeable material does not let any liquid or gas pass through it. The impermeable material may be leather or a leather-effect material.

The outer layer may also form an exterior cover for the wall and/or for the outer surface of the base that is facing away from the interior of the bassinet.

The outer surface of the base that is facing away from the interior of the bassinet may face the floor of an aircraft cabin, when the bassinet is in use.

The outer layer may form the entire outer surface of the bassinet. The outer layer may act as a noise-reflecting exterior of the whole bassinet.

The outer layer may be a single piece of material, covering the wall and/or the base of the bassinet.

The outer layer may offer additional structural support to the bassinet.

The single outer layer may improve the aesthetic appearance of the bassinet.

The bassinet may be substantially cuboidal.

The wall of the bassinet may be formed of a plurality of sides, each of which is substantially straight.

The wall may have curved corners, where its sides meet, while still giving the overall impression of being cuboidal.

The wall may have minor variations in shape along its substantially straight sides, while still giving the overall impression of the bassinet being cuboidal.

The base of the bassinet may be rectangular and the wall may surround the base on all sides.

When the bassinet is in use, the wall prevents a baby from falling out of the bassinet.

When the bassinet is in use, the wall, which comprises an inner layer and a noise-reducing layer, significantly reduces both noise from the aircraft that is perceived by the baby and noise from the baby that is perceived by other passengers on the aircraft, from all sides of the wall.

Alternatively, the wall may border the base on one side. The other three sides of the bassinet may be formed by part of the interior of the aircraft.

For example, the bassinet may be for an alcove in the aircraft cabin and the three sides being provided by the walls of the alcove. Alternatively, the other three sides are part of the bassinet, but do not comprise a noise-reducing layer.

Alternatively, the wall may border the base on two sides. The other two sides of the bassinet may be formed by part of the interior of the aircraft.

For example, the bassinet may be for a corner in the aircraft cabin and the two sides being provided by the walls of the corner of the aircraft cabin.

Alternatively, the other two sides are part of the bassinet but do not comprise a noise-reducing layer.

Alternatively, the wall may border the base on three sides. The other (fourth) side of the bassinet may be formed by part of interior of the aircraft.

For example, the fourth side being provided by an interior wall of the aircraft cabin.

Alternatively, the fourth side is part of the bassinet but does not comprise a noise-reducing layer.

The bassinet may be foldable, particularly along edges where the wall meets the base. The bassinet may be stored and transported in its folded form, reducing the space it occupies in an aircraft cabin when it is compactly stored.

The bassinet being foldable may improve the ease with which one may move it around the aircraft cabin.

Particularly, the bassinet may be foldable in such a way that the noise-reducing layer of the wall can remain flat and/or unbent, when the bassinet is in its folded form. Folding the bassinet facilitates storage and transport of the bassinet in such a way that preserves the wall of the bassinet.

The bassinet may further comprise a mattress, the mattress being located on the base.

The mattress may be removable from the base of the bassinet, such that it can be transported separately to the bassinet. The mattress provides a soft surface for a baby to lie on when the bassinet is in use.

The bassinet may further comprise a structural frame for fixing the bassinet to the interior of an aircraft.

The structural frame may be formed of tubes and/or panels. The structural frame may be configured to be mounted on, and/or attached to, the interior of the aircraft cabin, particularly an interior wall of the aircraft.

The structural frame may be such that, when it is mounted to the interior of the aircraft, particularly an interior wall of the aircraft, the base of the bassinet is suspended above the floor of the aircraft.

Alternatively the structural frame may be configured to be used with wheels, forming a crib that is roll-able on wheels.

The bassinet may be removable from the structural frame, particularly for washing and/or to be replaced by another bassinet without needing to change the structural frame.

The bassinet may be attached to the frame by a securing means, for example (a) zip(s) and/or a hook-and-loop fastening.

Alternatively, the structural frame may be integral with the bassinet.

The outer layer may cover some or all of the structural frame, when the bassinet is in use, improving the aesthetic appearance of the bassinet. Covering the structural frame may also improve the safety of passengers, who may otherwise come into direct contact with the, potentially hard, structural frame.

In the case that the outer layer is a single piece of material, the outer layer may cover some or all of the structural frame, further improving the aesthetic value of the bassinet.

According to a second aspect of the invention there is provided a kit of parts for a bassinet according to the first aspect of the invention.

According to a third aspect of the invention there is provided a method of reducing noise in an aircraft comprising the steps of;
- providing a bassinet according to the first aspect of the invention,
- providing a frame for fixing the bassinet to the interior of an aircraft, and
- assembling the bassinet to the frame.

The reduction of noise in the aircraft may be as a result of at least some of the sound generated inside the bassinet when it is in use, for example cries of a baby, being absorbed or trapped by the wall of the bassinet.

Additionally or alternatively, the reduction of noise in the aircraft may be as a result of at least some of the sound generated outside the bassinet being reduced as a result of the sound-absorbing and/or sound reflecting properties of the wall of the bassinet.

When the bassinet is in use, the reduction of noise perceived from the interior of the bassinet may be such that a baby is less likely to cry and therefore does not contribute to the noise in the aircraft cabin.

The method of reducing noise in an aircraft may further comprise the step of fixing the assembled bassinet and frame to the aircraft.

In particular, fixing the assembled bassinet and frame to the aircraft may comprise fixing the assembled bassinet and frame to a structure of the aircraft such as an interior wall of the aircraft cabin.

The steps of the method may be carried out in the order described, or in a different order. For example, alternatively the frame may be fixed to the aircraft first, then the bassinet may be assembled to the frame that is already fixed to the aircraft.

It will of course be appreciated that features described in relation to one aspect of the present invention may be incorporated into other aspects of the present invention, insofar as they fall within the scope of the appended claims. For example, the method of the invention may incorporate any of the features described with reference to the apparatus of the invention and *vice versa.*

### Description of the Drawings

Embodiments of the present invention will now be described in detail, by way of non-limiting examples, but the present invention is not limited to these disclosures, and will make it easy to understand what the invention consists of and how it can be embodied, with reference to the accompanying schematic drawings of which:
- Figure 1: shows a perspective view of a generic bassinet;
- Figure 2: shows a cross-sectional view of a bassinet, showing its basic structure;
- Figure 3a: shows a cross-sectional view of a bassinet according to a first embodiment of the invention;
- Figure 3b: shows a close-up view of Figure 3a with additional sound waves;
- Figure 4a: shows a cross-sectional view of a bassinet according to a second embodiment of the invention in its folded form;
- Figure 4b: shows a cross-sectional view of a bassinet according to the second embodiment of the invention in its unfolded form; and
- Figure 5: shows a flow diagram of a method according to a third embodiment of the invention.

### Detailed Description

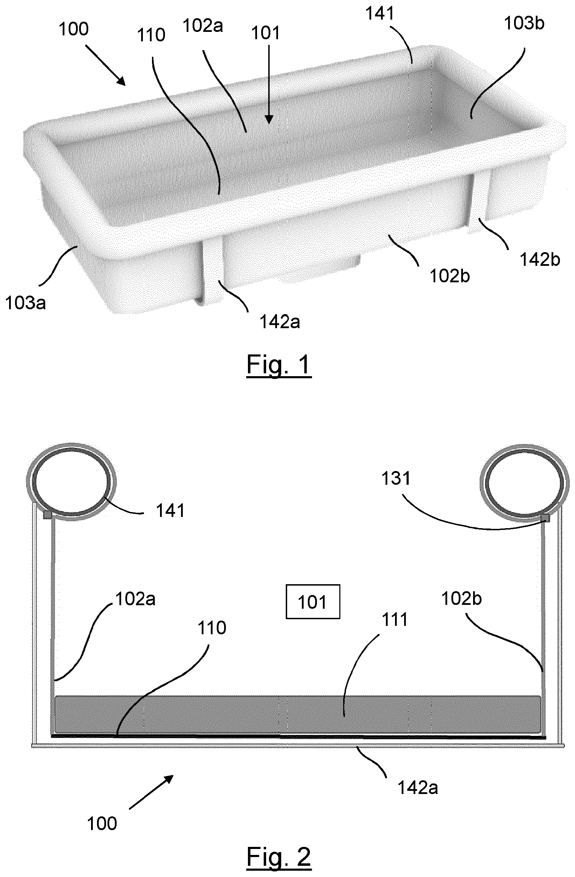

Figures 1 and 2 show respectively a perspective view and a cross-sectional view of a generic bassinet 100. Particularly, the generic bassinet 100 is now described with reference to Figures 1 and 2, showing the basic structure of the bassinet 100.

The bassinet 100 is a type of bassinet that could be used by airlines for babies to sleep in, particularly during long haul flights.

The bassinet 100 has two long sides 102a and 102b, two short sides 103a and 103b, and a base 110, particularly a rectangular base 110. The bassinet 100 may have an overall cuboidal shape.

With such arrangement, the bassinet 100 has an interior 101.

When the bassinet 100 is in use, a baby is placed in the interior 101 of the bassinet 100 and the baby lies on an upper surface of the base 110.

The bassinet 100 is attached to a structural tube 141. The structural tube 141 may form a perimeter of the bassinet 100, particularly a rectanglular perimeter of the bassinet 100. The structural tube 141 may substantially be the same shape and size as the base 110.

The structural tube 141 may be hollow and may have a circular cross section.

When the bassinet 100 is in use, its orientation is such that the structural tube 141 forms a top part of the bassinet 100 and the base 110 forms a bottom part of the bassinet 100.

The long sides 102a and 102b, and the short sides 103a and 103b extend between the structural tube 141 and the base 110. The structural tube 141 can be mounted on an interior wall of the aircraft, not shown in the Figures.

Two bracket arms 142a and 142b are attached to the structural tube 141. The Two bracket arms 142a and 142b support the base 110.

Each bracket arm 142a, 142b has two opposite ends that extend down from the structural tube 141 and along an outside of each long side 102a, 102b of the bassinet 100.

Each bracket arm 142a, 142b may have a base bar extending between its two ends that is parallel to the base 110.

The bracket arms 142a and 142b may be positioned approximately a quarter of the way along the long sides 102a and 102b from each short side 103a, 103b.

The long sides 102a and 102b, and the short sides 103a and 103b may be attached to the structural tube 141 by a securing means 131, such as a zip 131.

First and second parts of the securing means 131 are positioned on each of the long sides 102a, 102b, and the short sides 103a and 103b such that, when the long sides 102a and 102b and the short sides 103a and 103b are wrapped around the structural tube 141, they align and the securing means 131 can be fastened, particularly around the structural tube 141.

A mattress 111 is provided with the bassinet 100 and is located on the surface of the base 110.

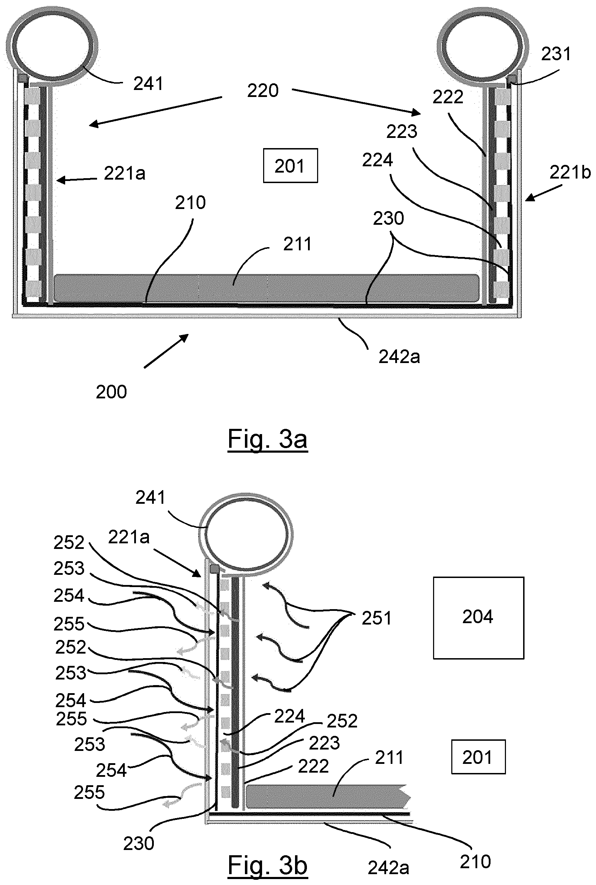

Figure 3a shows a cross-sectional view of a bassinet 200 according to a first embodiment of the invention. Figure 3b shows a close-up view of Figure 3a. More particularly, the bassinet 200 in accordance with the first embodiment of the invention is now described with reference to Figures 3a and 3b.

The bassinet 200 has a similar basic structure as the bassinet 100, as described with reference to Figures 1 and 2.

The bassinet 200 has a base 210, a wall 220 and a cover 230. With such arrangement, the bassinet 200 has an interior 201.

The wall 220 has four sides comprising two long sides 221a and 221b and two short sides, not shown in the Figures 3a and 3b.

The long sides 221a and 221b make up a length of the bassinet 200 and the short sides make up a width of the bassinet 200. Moreover, the long sides 221a and 221b and the short sides have a height which make up a height of the bassinet 200.

As a particular embodiment, the length, the width and the height of the bassinet 200 may be 75cm, 33cm and 22cm, respectively.

The wall 220, respectively the long sides 221a and 221b and the short sides, may have a thickness of 6mm and may be made up of three layers.

The wall 220 may comprise an inner layer 222, a sound-absorbing layer 223 and a perforated layer 224.

The inner layer 222, the sound-absorbing layer 223 and the perforated layer 224 of the wall 220 are labelled on only one of the long sides 221b, but the wall 220 has the same construction on all four of its sides, that are the long sides 221a and 221b and the short sides

The inner layer 222 is the inner surface of the wall 220 and faces into the interior 201 of the bassinet 200. The inner layer 222 may be made from a breathable fabric. The inner layer 222 may have a thickness of 1mm.

The sound-absorbing layer 223 is adjacent and against the inner layer 222. The sound-absorbing layer 223 may be made from an open-cell foam, which has good noiseinsulation properties. The sound-absorbing layer 223 may have a thickness of 1.5mm.

The perforated layer 224 is adjacent and against the sound-absorbing layer 223. The perforated layer 224 may be made from aluminium. The perforated layer 224 may have a thickness of 3mm. The perforations in the perforated layer 224 may make up substantially up to 15%, particularly up to 12% of its surface area.

The cover 230 covers the lower surface of the base 210 and the outer surface of the wall 220, more particularly the perforated layer 224, specifically on all four sides. The cover 230 may be made from a leather-effect material, which does not allow any liquid or gas to pass through it. The cover 230 may have a thickness of 0.5mm.

In use, the inner layer 222, the sound-absorbing layer 223 and the perforated layer 224 of the wall 220 and the cover 230 of the bassinet 200 reduce noise in an aircraft. In use, a baby 204 is placed in the interior 201 of the bassinet 200.

The arrows shown in Figure 3b represent sound waves.

The baby 204 generates crying soundwaves 251 when it cries. The crying soundwaves 251 travel outwardly from the baby 204 in all directions. The crying soundwaves 251 travel to the wall 220 of the bassinet 200.

The crying soundwaves 251 first meet the inner layer 222 of the wall 220. The inner layer 222 has some noise insulating properties and therefore reduced crying soundwaves 252 travel out from the inner layer 222.

The reduced crying soundwaves 252 then travel through the sound-absorbing layer 223 and the perforated layer 224. The sound-absorbing layer 223 and the perforated layer 224 absorb and trap the reduced crying soundwaves 252.

Further reduced crying soundwaves 253 travel out from the wall 220. The further reduced crying soundwaves 253 are of significantly lower volume than the original crying soundwaves 251 that originated from the baby 204 in the interior 201 of the bassinet 200.

The aircraft and passengers, not shown in figures, also generate aircraft soundwaves 254. The aircraft soundwaves 254 include noises from the engine, passengers speaking in the cabin and/or food-preparation facilities on board the aircraft.

The aircraft soundwaves 254 travel to the cover 230 of the bassinet 200. The cover 230 has noise-reflecting properties. Therefore, the aircraft soundwaves 254 bounce off the cover 230. The reflected aircraft soundwaves 255 travel away from the cover 230 and back into the aircraft cabin.

Any aircraft soundwaves 255 that may not be reflected by the cover 230 must travel through the perforated layer 224, the sound-absorbing layer 223 and the inner layer 222 before they arrive at the interior 201 of the bassinet 200. Therefore, the aircraft soundwaves 255 that reach the baby 204, having the potential to disturb the baby 204, are of significantly low volume.

The bassinet 200 is attached to a structural tube 241. The structural tube 241 may form a perimeter of the bassinet 200, particularly a rectangular perimeter of the bassinet 200, The structural tube 241 may substantially be the same shape and size as the base 210.

The structural tube 241 may be hollow and may have a circular cross section.

When the bassinet 200 is in use, its orientation is such that the structural tube 241 forms a top part of the bassinet 200 and the base 210 forms a bottom part of the bassinet 200.

The long sides 221a and 221b, and the short sides extend between the structural tube 241 and the base 210. The structural tube 241 can be mounted on an interior wall of the aircraft, not shown in the Figures.

Two bracket arms (only one with reference 242a is shown in figures 3a and 3b) are attached to the structural tube 241. The two bracket arms support the base 210.

Each bracket arm has two opposite ends that extend down from the structural tube 241 and along an outside of each long side 221a and 221b of the bassinet 200.

Each bracket arm may have a base bar extending between its two ends that is parallel to the base 210.

The bracket arms may be positioned approximately a quarter of the way along the long sides 221a and 221b from each short side.

The long sides 221a and 221b, and the short sides may be attached to the structural tube 241 by a securing means 231, such as a zip 231.

First and second parts of the securing means 231 are positioned on each of the long sides 221a and 221b and the short sides such that, when the long sides 221a and 221b and the short sides are wrapped around the structural tube 241, they align so that the securing means 121 can be fastened, particularly around the structural tube 241.

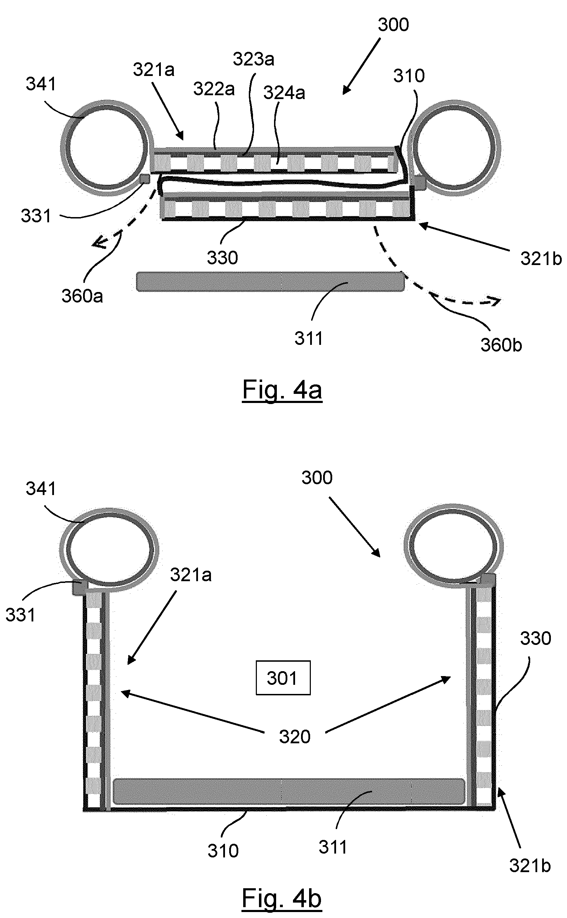

Figures 4a and 4b show a cross-sectional view of a bassinet 300 according to a second embodiment of the invention respectively in its folded form and in its unfolded form. More particularly, the bassinet 300 in accordance with a second embodiment of the invention is now described with reference to Figures 4a and 4b.

The bassinet 300 has a similar basic structure as the bassinet 200 of the first embodiment that was described with reference to Figures 3a and 3b.

The bassinet 300 is moveable between a folded form, shown in Figure 4a, and an unfolded form, shown in Figure 4b.

The bassinet 300 has a base 310, a wall 320 and a cover 330. With such arrangement, the bassinet 300 has an interior 301.

The wall 320 has four sides comprising a first long side 321a and a second long side 321b and two short sides, not shown in the Figures 4a and 4b.

The bassinet 300, in its folded form, is stacked such that the first long side 321a of the wall 320 is on top of the second long side 321b of the wall 320. The part of the cover 330 that forms the base 310, when the bassinet is in its unfolded form, extends between the first long side 321a and the second long side 321b.

To move the bassinet 300 from its folded form to its unfolded form, the second side 321b is moved in a second direction 360b with part of the cover 330 stretching between the first long side 321a and the second long side 321b and the first long side 321a is moved in a first direction 360a.

This part of the cover 330, which has been stretched between the first long sides 321a and the second long side 321b, now forms the base 310 of the bassinet 300.

A mattress 311 is placed on the base 310 of the bassinet 300, providing a soft surface for lying a baby in the interior 301 of the bassinet 300.

The mattress 311 is removed from the bassinet 300 before returning the bassinet 300 from its unfolded form to its folded form.

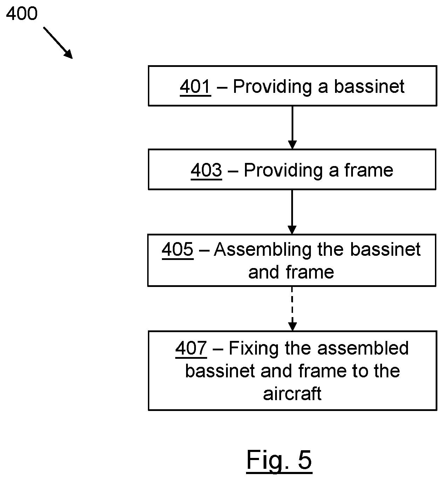

Figure 5 shows a flow diagram of a method 400 according to a third embodiment of the invention. More particularly, the method 400 in accordance with the third embodiment of the invention is now described with reference to Figure 5.

The method 400 comprises
- a first step 401 of providing a bassinet;
- a second step 403 of providing a frame for fixing the bassinet to an interior of an aircraft;
- a third step 405 of assembling the bassinet and the frame
- a fourth optional step 407 of fixing the assembled bassinet to the interior of the aircraft.

The third step 405 of the method 400 may include using securing means, zips or hook and loop fastenings located on the bassinet.

While the present invention has been described and illustrated with reference to particular embodiments, it will be appreciated by those of ordinary skill in the art that the invention lends itself to many different variations not specifically illustrated herein. By way of example only, certain possible variations will now be described.

The inner layer, the sound-absorbing layer and/or the perforated layer of the wall that are described in the description may not all be present in every embodiment of the invention. For example, there may be a layer or layers missing from the wall. There may also be additional layers that are not described in the description, or the wall may have more than one layer of a single type.

The cover may form part of the wall, i.e. making up a fourth layer of the wall.

In some embodiments, not all sides of the bassinet will be made up by the wall with the layers described in the description. Some of the sides may be made only of fabric, for example.

The bassinet have any desired dimensions, thicknesses etc., and may be of any desired shape or configuration, and not only those of the examples particularly described.

Reference should be made to the claims for determining the scope of the present invention.

## Claims

1. A foldable bassinet (300) for an aircraft comprising at least:
a base (310), providing a flat surface, and
a wall, attached to the base and defining an interior (301) of the bassinet (300);
**characterised in that** the wall (320) comprises at least a noise-reducing layer; and
wherein the noise-reducing layer comprises a perforated layer (324).

2. A foldable bassinet (300) as claimed in claim 1, wherein the noise-reducing layer further comprises a sound-absorbing layer (323).

3. A foldable bassinet (300) as claimed in any preceding claim, wherein the bassinet (300) further comprises an inner layer (322) facing the interior (301) of the bassinet (300); and wherein the noise-reducing layer is outside of the inner layer (322).

4. A foldable bassinet (300) as claimed in any preceding claim, wherein the bassinet (300) further comprises an outer layer forming an exterior cover (330) for the wall (320).

5. A foldable bassinet (300) as claimed in claim 4, wherein the outer layer is a noise-reflecting layer.

6. A foldable bassinet (300) as claimed in claim 4 or claim 5, wherein the outer layer also forms an exterior cover (330) for an outer surface of the base (310) that is facing away from an interior (301) of the bassinet (300).

7. A foldable bassinet (300) as claimed in any preceding claim, wherein the bassinet (300) further comprises a structural frame for fixing the bassinet (300) to the interior of the aircraft.

8. A kit of parts for a foldable bassinet (300) as claimed in any preceding claim, the kit of parts comprising at least: a base (310), providing a flat surface; and a wall (320), configured to be attached to the base (310) to define an interior (301) of the bassinet (300); wherein the wall (320) comprises at least a noise-reducing layer; and wherein the noise-reducing layer comprises a perforated layer (324).

## Patentansprüche

1. Zusammenklappbares Babybett (300) für ein Flugzeug, das mindestens Folgendes umfasst:
eine Basis (310), die eine ebene Fläche bereitstellt, und
eine Wand, die an der Basis befestigt ist und einen Innenraum (301) des Babybetts (300) definiert;
**dadurch gekennzeichnet, dass** die Wand (320) mindestens eine geräuschmindernde Schicht umfasst; und
wobei die geräuschmindernde Schicht eine perforierte Schicht (324) umfasst.

2. Zusammenklappbares Babybett (300) nach Anspruch 1, wobei die geräuschmindernde Schicht ferner eine schallabsorbierende Schicht (323) umfasst.

3. Zusammenklappbares Babybett (300) nach einem der vorstehenden Ansprüche, wobei das Babybett (300) ferner eine dem Innenraum (301) des Babybetts (300) zugewandte Innenschicht (322) umfasst; und
wobei sich die geräuschmindernde Schicht außerhalb der Innenschicht (322) befindet.

4. Zusammenklappbares Babybett (300) nach einem der vorstehenden Ansprüche, wobei das Babybett (300) ferner eine Außenschicht umfasst, die eine Außenabdeckung (330) für die Wand (320) bildet.

5. Zusammenklappbares Babybett (300) nach Anspruch 4, wobei die Außenschicht eine schallreflektierende Schicht ist.

6. Zusammenklappbares Babybett (300) nach Anspruch 4 oder Anspruch 5, wobei die Außenschicht außerdem eine Außenabdeckung (330) für eine Außenfläche der Basis (310) bildet, die vom Innenraum (301) des Babybetts (300) abgewandt ist.

7. Zusammenklappbares Babybett (300) nach einem der vorstehenden Ansprüche, wobei das Babybett (300) ferner einen Tragrahmen zur Befestigung des Babybetts (300) im Innenraum des Flugzeugs umfasst.

8. Teilesatz für ein zusammenklappbares Babybett (300) nach einem der vorstehenden Ansprüche, wobei der Teilesatz mindestens Folgendes umfasst: eine Basis (310), die eine ebene Fläche bereitstellt, und eine Wand (320), die so konfiguriert ist, dass sie an der Basis (310) befestigt wird, um einen Innenraum (301) des Babybetts (300) zu definieren; wobei die Wand (320) mindestens eine geräuschmindernde Schicht umfasst; und wobei die geräuschmindernde Schicht eine perforierte Schicht (324) umfasst.

## Revendications

1. Un berceau pliable (300) pour un aéronef comprenant au moins :
une base (310), fournissant une surface plane, et
une paroi, fixée à la base et délimitant un intérieur (301) du berceau (300) ;
**caractérisé en ce que** la paroi (320) comprend au moins une couche d'atténuation du bruit ; et
dans lequel la couche d'atténuation du bruit comprend une couche perforée (324).

2. Un berceau pliable (300) tel que revendiqué dans la revendication 1, dans lequel la couche d'atténuation du bruit comprend en outre une couche absorbant le son (323).

3. Un berceau pliable (300) tel que revendiqué dans l'une quelconque des revendications précédentes, dans lequel le berceau (300) comprend en outre une couche interne (322) faisant face à l'intérieur (301) du berceau (300) ; et
dans lequel la couche d'atténuation du bruit est à l'extérieur de la couche interne (322).

4. Un berceau pliable (300) tel que revendiqué dans l'une quelconque des revendications précédentes, dans lequel le berceau (300) comprend en outre une couche externe formant une housse extérieure (330) pour la paroi (320).

5. Un berceau pliable (300) tel que revendiqué dans la revendication 4, dans lequel la couche externe est une couche réfléchissant le bruit.

6. Un berceau pliable (300) tel que revendiqué dans la revendication 4 ou la revendication 5, dans lequel la couche externe forme également une housse extérieure (330) pour une surface externe de la base (310) qui est orientée à l'opposé d'un intérieur (301) du berceau (300).

7. Un berceau pliable (300) tel que revendiqué dans l'une quelconque des revendications précédentes, dans lequel le berceau (300) comprend en outre un cadre structurel pour fixer le berceau (300) à l'intérieur de l'aéronef.

8. Un kit de pièces pour un berceau pliable (300) tel que revendiqué dans l'une quelconque des revendications précédentes, le kit de pièces comprenant au moins : une base (310), fournissant une surface plane ; et une paroi (320), configurée pour être fixée à la base (310) afin de délimiter un intérieur (301) du berceau (300) ; dans lequel la paroi (320) comprend au moins une couche d'atténuation du bruit ; et dans lequel la couche d'atténuation du bruit comprend une couche perforée (324).
